# EUROPEAN PATENT SPECIFICATION

(11) **EP 0 979 268 B1**
(45) Date of publication and mention of the grant of the patent: **19.03.2003**
(21) Application number: 98917168.1
(22) Date of filing: 28.04.1998
(51) Int. Cl.: C12C 11/09, C12H 1/00

(54) **METHOD FOR THE MATURATION OF BEER**
VERFAHREN ZUR REIFUNG VON BIER
PROCEDE DE MATURATION DE LA BIERE

(30) Priority: 29.04.1997 FI 971838
(43) Date of publication of application: 16.02.2000
(73) Proprietor: OY PANIMOLABORATORIO - BRYGGERILABORATORIUM AB, 02151 Espoo (FI)
(72) Inventor: LINKO, Matti, FIN-02130 Espoo (FI); VIRKAJÄRVI, Ilkka, FIN-02100 Espoo (FI); KRONLÖF, Jukka, FIN-15880 Hollola (FI); PAJUNEN, Esko, FIN-00250 Helsinki (FI)
(74) Representative: Partio, Erja
(86) International application number: FI9800370
(87) International publication number: WO98049264

(56) References cited:
- US-A- 4 915 959
- DIALOG INFORMATION SERVICES, BIOSIS, Dialog Accession No. 3369982, Biosis Accession No. 72002373, MOO-YOUNG M. et al., "Immobilization of Yeast Cells on Various Supports for Ethanol Production"; & BIOTECHNOL. LETT., 2(12), 1980 (RECD. 1981), 541-548.
- DIALOG INFORMATION SERVICES, File 53, FOODLINE, Dialog Accession No. 00505957, Foodline Accession No. 461380, LINKO M. et al., "Main Fermentation with Immobilized Yeast - A Breakthrough"; & PROCEEDINGS OF THE 26TH CONGRESS, MAASTRICHT, 1997, 385-394.

## Description

The present invention relates to a continuous method for the maturation of beer after main fermentation, in which method the unmatured beer, after removal of yeast and a heat treatment, is passed into a bio-reactor filled with a carrier with yeast immobilised on it.

Beer production generally comprises the following main steps:
malting of grain (usually barley) by germinating,
crushing of the malted grain to produce malt grist,
adding water into the grist to form a mash,
mashing to decompose starch into fermentable sugar,
separating the wort thus produced from the mash,
cooking the wort with hops to produce a taste and aroma and to stop the enzymatic activity,
clarifying and cooling the wort,
fermenting the wort with yeast to convert the glucose and maltose into ethanol and carbon dioxide (main fermentation) to produce unmatured beer,
maturing the unmatured beer (secondary fermentation), and
filtering and stabilising the beer and putting it into suitable containers.

The maturation of beer is an important operation to give the beer a mellow and homogeneous taste and flavour.

Traditionally, beer is matured by storing the unmatured beer for several weeks at a low temperature after the main fermentation. This involves high storage costs, which has given rise to the development of a fast continuous method for the maturation of beer to substitute storage. In this method, the yeast is removed from the unmatured beer after the conventional main fermentation, the unmatured beer is subjected to a heat treatment (e.g. 80 - 90 °C for 5 - 15 min), whereupon the beer is cooled (e.g. 10 - 15 °C) and then matured in a reactor in which the yeast is immobilised on a carrier. Finally, the beer is finished, i.e. stabilised and filtered in the conventional manner. The retention time in the continuous reactor is of the order of e.g. two hours.

During the heat treatment, the α-acetolactate contained in the unmatured beer is converted to diacetyl and partly also acetoin. The taste of diacetyl is felt in beer even when the acetyl concentration is only 0.05 mg/l. It is a strong sugary or taffy-like taste and flavour, which is characteristic of unmatured or newly brewed beer. In the reactor, the yeast reduces the diacetyl into acetoin. At the same time, certain other carbonyl compounds are also reduced, and the result is a savoury beer. Acetoin has a milder taste and flavour, and the threshold concentration, 50 - 1000 mg/l, above which its taste is felt in beer is considerably higher than for diacetyl.

Prior-art methods are described e.g. in the following articles: Monograph XXIV of the European Brewery Convention, E.B.C.-Symposium Immobilized yeast applications in the brewing industry, Espoo, Finland, October 1995 (ISBN 3-418-00749-X): E. Pajunen: Immobilized yeast lager beer maturation: DEAE-cellulose at Sinebrychoff (pages 24-40) and I. Hyttinen: Use of porous glass at Hartwall brewery in the maturation of beer with immobilized yeast (pages 55-56). In the former application, the carrier used to immobilise the yeast is DEAE cellulose with titanium dioxide and polystyrene mixed in it; patent specification US 4915959 describes the same application. In the latter application, the carrier is porous glass. In the production of beer containing only a small amount of alcohol or no alcohol, a column in which yeast is immobilised in DEAE cellulose (H.Lommi: Immobilized yeast for maturation and alcohol-free beer, Brewing and Distilling International, May 1990, pp. 22-23) has been used.

These applications work well in a technical sense, and the beer produced is of good quality, the same as beer matured by the traditional method. However, the problem with the known applications is the high cost of the carrier materials. Purchase of the carrier material is a significant investment, and because of the high price the carrier must be regenerated after a certain period of use so that it can be used again.

In traditional maturation in a container, fairly large wooden strips e.g. 400 - 500 mm long and 40 - 50 mm wide have been added into the storage containers. The purpose of the strips is to bind some of the yeast and thus to promote the clarification, and to some extent, secondary fermentation of the beer. This is a conventional slow batch process. Some breweries still use this procedure, mainly to preserve the tradition.

In the production of ethanol by a continuous fermenting process, immobilisation of yeast has been effected by using pieces of wood, e.g. beech, (M. Moo-Young, J. Lamptey and C.W. Robinson: Immobilisation of yeast cells on various supports for ethanol production, Biotechnology Letters 2 (1980) No. 12, pp. 541-545) and birch (M.A. Gencer and R. Mutharasan: Ethanol fermentation in a yeast immobilised tubular fermentor, Biotechnology and Bioengineering 25 (1983) 2243-2262). However, the production of ethanol is completely different from the manufacture of beer: in the former, the aim is to achieve a fermenting process as effective as possible, whereas in the latter the primary objective is to develop the desired good taste and flavour in conjunction with the fermenting process.

In the production of beer, small-scale experiments have also been carried out in which wooden chips have been used in conjunction with main fermentation to immobilise yeast: J. Kronlöf and V.-P. Määttä: Main fermentation using immobilised yeast in beer production, Mallas ja Olut 1993, No. 5, pp. 133-147).

The object of the present invention is to eliminate the drawbacks mentioned above.

The object of the invention is to disclose a fast, continuous method for the maturation of beer, in which yeast immobilised on a carrier effectively reduces the diacetyl concentration to a level below an acceptable taste threshold and which is applicable for use in conjunction with known beer production methods for the maturation of unmatured beer.

Another object of the invention is to disclose a fast, continuous method for the maturation of beer in which the carrier is an economically priced and risk-free material.

The method of the invention for the maturation of beer is characterised by what is presented in claim 1.

The invention is based on research work carried out, the aim of which was to apply the technique of immobilising yeast to secondary fermentation and maturation of beer. It was unexpectedly established that wooden particles and/or particles produced from tropical gramineous plants are excellently suited for use as a carrier for the immobilisation of yeast.

In the continuous method of the invention for the maturation of beer, the unmatured beer, after the removal of yeast and a heat treatment, is passed into a bio-reactor filled mainly with wooden particles and/or particles produced from tropical gramineous plants with yeast immobilised on them. The principle of the method of the invention is the same as in industrial procedures using DEAE cellulose or porous glass as a carrier. The yeast removal and other secondary treatment operations are performed. as in the known procedures.

The method of the invention is applicable for the production of various kinds of beer, i.e. bottom yeast beer and scum yeast beer. Suitable raw materials are malt and other sources of starch and sugar as are known in beer production. The beer to be produced may have an alcoholic content between 0 - 10 % and a pitching wort content between 5 - 20 % or more, even 30 %.

In the method of the invention, the carrier may consist of wooden particles and/or particles produced from tropical gramineous plants of any size and shape, preferably cut into fairly small chips, sticks or into the shape of any regular or irregular bodies of roughly uniform size. The largest dimension of the particles is mainly 1 - 100 mm, advantageously 1 - 50 mm and preferably 2 - 20 mm.

The wooden particles to be used may be produced from any deciduous wood species, e.g. aspen, beech, palm. The particles may also be produced from coniferous wood. The wood species to be used can be so chosen that the aromatic substances contained in it will have a desired effect on the taste and flavour of the beer to be produced. The particles may also be produced from tropical grass, e.g. bamboo, rattan.

In the continuous reactor, some of the yeast is immobilised on the carrier and some of it may be freely suspended. Conventional known brewing yeasts are well suited for use in such a reactor. However, if highly flocculable yeasts are used, a high yeast concentration will be quickly reached in the reactor, and the high yeast concentration is also maintained, thus improving the efficiency of the reactor.

The immobilisation of yeast can be implemented in any known way, e.g. as described in patent specification US 4915959.

The amount of immobilised yeast in the reactor may vary as is known in the art, a preferable amount being 10⁶ - 10⁹ yeast cells/1 cm³ of filler particles. The service life of the wooden particles used for yeast immobilisation is a few months, e.g. 1 - 6 months, but it may be as long as 1 year or more.

The rate at which the unmatured beer flows through the reactor and its retention time in the reactor have an effect on the diacetyl content of the beer. The flow rate of the unmatured beer is adjusted to a value such that a sufficient amount of diacetyl is reduced to acetoin in the reactor, with the result that the diacetyl concentration in the matured beer does not exceed an acceptable taste threshold. The flow rate of unmatured beer through the reactor may be 0.05 - 2 times the reactor volume / h. A preferred flow rate of unmatured beer is of the order of 0.5 - 1 reactor volume / h. The temperature in the reactor is 5 - 22 °C, preferably 5 - 20 °C. Even higher temperatures may be used.

The maturation reactor may be pressurised to maintain the carbon dioxide in a dissolved state in the reactor. Free carbon dioxide may hamper the operation of the reactor. The operation pressure can be selected according to temperature, desired taste and beer quality.

After the maturation, the beer can be cooled to a desired stabilising temperature, and secondary treatment of the beer, such as stabilising, filtering and decanting, can be implemented in a manner known in itself.

Because of their low price, the wooden particles and/or particles produced from tropical gramineous plants used as filler may be thrown away after use. Disposal of the particles is easy and free of risks. The filler may also be regenerated after use, e.g. by treating them with hot water or vapour, by washing or by some other suitable treatment.

If desirable, the wooden particles and/or produced from tropical gramineous plants particles used as filler can be subjected to a treatment prior to immobilisation. The particles can be e.g. washed or treated in some other way as desired.

The continuous maturation reactor of the invention is an upright column in which the liquid flows through the column from bottom to top or from top to bottom. The diameter of the reactor is of the order of 1.5 ± 1 - 2.5 ± 1m and its height is of the order of 2.5 - 10 m. The column may be provided with one or more sieves, intermediate bottoms or flanges to keep the filler particles in the reactor. The column is filled mainly with wooden particles and/or particles produced from tropical gramineous plants with yeast immobilised on them.

As compared with prior art, the advantages of the invention are based on the use of a cheaper carrier material, which gives the same final result as more expensive carrier materials.

The low price of the wooden particles and/or particles produced from tropical gramineous plants also makes it unnecessary to regenerate the particles. When expensive carriers are used, regeneration is necessary to prolong the service life of the carrier. Regeneration causes direct and indirect additional costs.

Wood and/or material produced from tropical gramineous plants also has the advantage that, being a natural material, it is free of risks.

The invention will now be described in detail via the following examples.

### EXAMPLE 1

### Test arrangements:

Räuchergold KL1 beech chips (5 litres) were cooked in ion-exchanged water (5.5 litres) for an hour. The water was removed and the chips were cooked. for 4 hours in ethanol containing 10 % alcohol by volume. The alcohol solution was removed and finally the chips were cooked for 1 hour in ion-exchanged water.

The reactor was filled with the wet chips up to the 5.1 l mark. The reactor was assembled and autoclaved at 121 °C for 21 minutes together with the connections and hoses. After cooling, 3 litres of yeast suspension was pumped into the reactor in 6 hours by using a hose pump. Air was supplied into the reactor at the rate of 50 ml/min and wort at the rate of 100 ml/h overnight at 20 °C. After this, the supply of materials was stopped and the reactor was cooled to 10 °C.

The unmatured beer fed into the process was unmatured beer produced via immobilised main fermentation, in which the total content of visinal diketones was about 0.8 - 0.3 mg/ml. After the main fermentation, the unmatured beer was filtered through Seitz K filter paper into an autoclaved (121 °C, 20 min) restaurant container, which was used as a supply container for the secondary fermentation reactor.

### Description of the process:

The process comprises heat treatment of unmatured beer, its cooling to 10 °C, secondary fermentation (maturation) with immobilised yeast, and reception of the product.

From the supply container, the unmatured beer is pumped into heat treatment using a diaphragm pump (Prominent Mini Gamma). The heat treatment (80 °C, about 60 min) takes place in a thin-walled metal retention pipe immersed in a water bath at about 80 °C. The beer removed from the heat treatment flows into a cooling jacket made of glass, where it is cooled to the secondary fermentation temperature of 10 °C. The cooled beer flows through the reactor from bottom to top. From the top of the reactor, the beer flows via a separating funnel into a receiving container. The receiving container used is a 50-1 restaurant container.

### Analyses:

From the unmatured beer fed in, from the heat treated unmatured beer and from the post-fermented beer, the total amounts of visinal diketones (total VDK), free diketones (free VDK), aromatic substances and apparent extract concentration were analysed. The retention time in the reactor was estimated based on the flow rate. In addition, the beer colour was analysed twice during the test period.

### Results:

The retention times in the reactor are presented in Table 1. With the reactor filled up to the 5.1 1 mark, the liquid volume in the reactor was 3.6 litres. The internal amount of liquid within the chips, which is very small as the chips are wet all the time, was not taken into account, nor was the liquid remaining on the surface of the chips.

**Table 1.**

| Flow rate | Retention time per volume of carrier material | Retention time according to the amount of liquid | Heat treatment time |
|---|---|---|---|
| ml/h | h/carrier volume | h | min |
| 200 | 25.5 | 18.0 | 65 |
| 300 | 17.0 | 12.0 | 43 |
| 400 | 12.8 | 9.0 | 32 |

Tables 2 - 4 present the conversions of visinal diketones for different flow rates.

**Table 2.**

| Concentrations of visinal diketones (mg/dm³) and their conversion (%) at flow rate 200 ml/h. | | | | |
|---|---|---|---|---|
| **1. determination** | Supply | Heat treated | Post-fermented | Conversion |
| total diacetyl | 0.77 | 0.70 | 0.02 | 97.4 |
| free diacetyl | 0.54 | 0.75 | 0.02 | 96.3 |
| total pentanedione | 0.20 | 0.18 | 0.01 | 95.0 |
| free pentanedione | 0.14 | 0.17 | 0.00 | 100.0 |
| total VISINAL DIKETONES | 0.97 | 0.98 | 0.03 | 96.9 |

| **2. determination** | | | | |
|---|---|---|---|---|
| total diacetyl | 0.41 | 0.39 | 0.02 | 95.1 |
| free diacetyl | 0.23 | 0.36 | <0.01 | |
| total pentanedione | 0.13 | 0.11 | <0.01 | |
| free pentanedione | 0.08 | 0.10 | <0.01 | |
| total VISINAL DIKETONES | 0.54 | 0.50 | <0.03 | |
| free pentanedione | 0.07 | 0.10 | <0.01 | |
| total VISINAL DIKETONES | 0.32 | 0.33 | <0.03 | 90.6 |

**Table 3.**

| Concentrations of visinal diketones (mg/dm³) and their conversion (%) at flow rate 300 ml/h. | | | | |
|---|---|---|---|---|
| **1. determination** | Supply | Heat treated | Post-fermented | Conversion |
| total diacetyl | 0.28 | 0.27 | 0.01 | 96.4 |
| free diacetyl | 0.17 | 0.27 | 0.01 | 94.1 |
| total pentanedione | 0.14 | 0.13 | 0.01 | 92.9 |
| free pentanedione | 0.07 | 0.12 | <0.01 | |
| total VISINAL DIKETONES | 0.42 | 0.40 | 0.02 | 95.2 |

| **2. determination** | | | | |
|---|---|---|---|---|
| total diacetyl | 0.39 | 0.37 | 0.02 | 94.9 |
| free diacetyl | 0.23 | 0.39 | 0.02 | 91.3 |
| total pentanedione | 0.22 | 0.19 | 0.01 | 95.4 |
| free pentanedione | 0.11 | 0.18 | <0.01 | |
| total VISINAL DIKETONES | 0.61 | 0.56 | 0.03 | 95.1 |

**Table 4.**

| Concentrations of visinal diketones (mg/dm³) and their conversion (%) at flow rate 400 ml/h. | | | | |
|---|---|---|---|---|
| | Supply | Heat treated | Post-fermented | Conversion |
| total diacetyl | 0.46 | 0.41 | 0.07 | 84.8 |
| free diacetyl | 0.27 | 0.38 | 0.06 | 77.8 |
| total pentanedione | 0.19 | 0.16 | 0.01 | 94.7 |
| free pentanedione | 0.09 | 0.14 | 0.01 | 88.9 |
| total VISINAL DIKETONES | 0.65 | 0.57 | 0.08 | 87.7 |

Table 5 presents the average changes in the aromatic substances in the process as a percentage of the initial value. Table 5 shows that only the acetaldehyde concentration has changed significantly during the process. This is in fact a favourable change because an excessive acetaldehyde content would give the beer a solvent-like flavour. The results are the average values for three determinations at different flow rates.

**Table 5.**

| | Supply | Heat treated | Post-fermented |
|---|---|---|---|
| Aromatic substance | % | % | % |
| ethyl acetate | 100 | 97 | 99 |
| 3-methyl butyl acetate | 100 | 69 | 80 |
| propanol | 100 | 101 | 102 |
| 2-methyl propanol | 100 | 100 | 102 |
| 3-methyl propanol | 100 | 99 | 101 |
| 2-methyl butanol | 100 | 99 | 101 |
| acetaldehyde | 100 | 103 | 68 |

Table 6 presents the results of the determinations of apparent extract concentration and colour. The apparent extract concentration and colour of the beer were determined twice during the test period to make sure that no changes occurred in the fermentation and that the darkish wood imparted no colour to the beer.

**Table 6.**

| | Supply | Heat treated | Post-fermented |
|---|---|---|---|
| extract concentration 200 ml/h (%) | 2.28 | 2.26 | 2.22 |
| extract concentration 300 ml/h (%) | 1.91 | 1.98 | 1.98 |
| colour 200 ml/h [EBC] | 26 | 28 | 26 |
| colour 300 ml/h [EBC] | 22 | 23 | 22 |

## Claims

1. Continuous method for the maturation of beer after main fermentation, in which method the unmatured beer, after removal of yeast and a heat treatment, is passed into a bio-reactor filled with a carrier material with yeast immobilised on it, **characterised in that** the carrier material mainly consists of wooden particles and/or particles produced from tropical gramineous plants.

2. Method as defined in claim 1, **characterised in that** said particles are chip-like or stick-like particles or particles shaped like any regular or irregular bodies, whose dimension is of the order of 1 - 100 mm, advantageously 1 - 50 mm, preferably 2 - 20 mm.

3. Method as defined in any one of claims 1 - 2, **characterised in that** the wooden particles have been produced from deciduous wood.

4. Method as defined in any one of claims 1 - 2, **characterised in that** the wooden particles have been produced from coniferous wood.

5. Method as defined in any one of claims 1 - 4, **characterised in that** the yeast used in the reactor is conventional brewing yeast and/or highly flocculable yeast.

6. Method as defined in any one of claims 1 - 5, **characterised in that** the amount of yeast in the reactor is 10⁶ - 10⁹ cells/1 cm³ of particles.

7. Method as defined in any one of claims 1 - 6, **characterised in that** the temperature in the reactor is 5 - 25 °C, preferably 5 - 20 °C.

8. Method as defined in any one of claims 1 - 7, **characterised in that** the flow rate of unmatured beer through the reactor is of the order of 0.05 - 2 times the reactor volume / h, preferably 0.5 - 1 reactor volume / h.

9. Method as defined in any one of claims 1 - 8, **characterised in that** the particles are regenerated, preferably using hot water or steam.

10. Method as defined in any one of claims 1 - 9, **characterised in that** the particles are subjected to a treatment, preferably a water cooking treatment or ethanol extraction treatment, prior to immobilisation.

11. Method as defined in claim 10, **characterised in that** that the particles are washed.

## Patentansprüche

1. Kontinuierliches Verfahren zur Reifung von Bier nach der Hauptgärung, wobei das nicht gereifte Bier nach der Entfernung von Hefe und einer Wärmebehandlung in einen Bioreaktor geleitet wird, der mit einem Trägermaterial mit darauf immobilisierter Hefe gefüllt ist, **dadurch gekennzeichnet, dass** das Trägermaterial hauptsächlich aus Holzteilchen und/oder Teilchen besteht, die aus tropischen Graspflanzen hergestellt werden.

2. Verfahren nach Anspruch 1, **dadurch gekennzeichnet, dass** die Teilchen schnitzelartige oder stabartige Teilchen oder Teilchen sind, die wie irgendein regelmäßiger oder unregelmäßiger Körper geformt sind, deren Abmessung in der Größenordnung von 1 - 100 mm, vorteilhafterweise 1 - 50 mm, vorzugsweise 2 - 20 mm liegt.

3. Verfahren nach einem der Ansprüche 1 - 2, **dadurch gekennzeichnet, dass** die Holzteilchen aus Laubholz hergestellt worden sind.

4. Verfahren nach einem der Ansprüche 1 - 2, **dadurch gekennzeichnet, dass** die Holzteilchen aus Nadelholz hergestellt worden sind.

5. Verfahren nach einem der Ansprüche 1 - 4, **dadurch gekennzeichnet, dass** die in dem Reaktor verwendete Hefe herkömmliche Brauhefe und/oder sehr flockungsfähige Hefe ist.

6. Verfahren nach einem der Ansprüche 1 - 5, **dadurch gekennzeichnet, dass** die Menge der Hefe in dem Reaktor 10⁶ - 10⁹ Zellen/1 cm³ der Teilchen beträgt.

7. Verfahren nach einem der Ansprüche 1 - 6, **dadurch gekennzeichnet, dass** die Temperatur in dem Reaktor 5 - 25°C, vorzugsweise 5 - 20°C beträgt.

8. Verfahren nach einem der Ansprüche 1 - 7, **dadurch gekennzeichnet, dass** die Fließgeschwindigkeit des nicht gereiften Biers durch den Reaktor in der Größenordnung von dem 0,05 - 2fachen des Reaktorvolumens/h, vorzugsweise 0,5 - 1 Reaktorvolumen/h liegt.

9. Verfahren nach einem der Ansprüche 1 - 8, **dadurch gekennzeichnet, dass** die Teilchen regeneriert werden, vorzugsweise unter Verwendung von heißem Wasser oder Dampf.

10. Verfahren nach einem der Ansprüche 1 - 9, **dadurch gekennzeichnet, dass** die Teilchen vor der Immobilisierung einer Behandlung, vorzugsweise einer Wasserkochbehandlung oder Ethanolextraktionsbehandlung unterworfen werden.

11. Verfahren nach Anspruch 10, **dadurch gekennzeichnet, dass** die Teilchen gewaschen werden.

## Revendications

1. Procédé continu de maturation de la bière après une fermentation principale, procédé dans lequel on fait passer la bière n'ayant pas maturé, après l'élimination de levure et un traitement thermique, dans un bioréacteur chargé avec une matière porteuse ayant une levure immobilisée sur elle, **caractérisé en ce que** la matière porteuse est principalement constituée de particules de bois et/ou de particules produites à partir de graminacées tropicales.

2. Procédé selon la revendication 1, **caractérisé en ce que** lesdites particules sont des particules analogues à une chip ou analogues à un bâtonnet ou des particules ayant une forme analogue à tous corps réguliers ou irréguliers, dont la dimension est de l'ordre de 1 à 100 mm, de manière avantageuse de 1 à 50 mm, de préférence de 2 à 20 mm.

3. Procédé selon l'une quelconque des revendications 1 et 2, **caractérisé en ce que** l'on a produit les particules de bois à partir d'un bois de feuillu.

4. Procédé selon l'une quelconque des revendications 1 et 2, **caractérisé en ce que** l'on a produit les particules de bois à partir d'un bois de conifère.

5. Procédé selon l'une quelconque des revendications 1 à 4, **caractérisé en ce que** la levure utilisée dans le réacteur est une levure de brasserie classique et/ou une levure hautement apte à la floculation.

6. Procédé selon l'une quelconque des revendications 1 à 5, **caractérisé en ce que** la quantité de levure dans le réacteur est de 10⁶ à 10⁹ cellules/l cm³ de particules.

7. Procédé selon la revendication 1 à 6, **caractérisé en ce que** la température dans le réacteur est de 5°C à 25°C, de préférence de 5°C à 20°C.

8. Procédé selon l'une quelconque des revendications 1 à 7, **caractérisé en ce que** le débit de la bière n'ayant pas maturé à travers le réacteur est de l'ordre de 0,05 à 2 fois le volume du réacteur/h, de préférence de 0,5 à 1 volume de réacteur/h.

9. Procédé selon l'une quelconque des revendications 1 à 8, **caractérisé en ce que** l'on régénère les particules, de préférence en utilisant de l'eau chaude ou de la vapeur d'eau.

10. Procédé selon l'une quelconque des revendications 1 à 9, **caractérisé en ce que** l'on soumet les particules à un traitement, de préférence un traitement de cuisson à l'eau ou un traitement d'extraction par l'éthanol, avant l'immobilisation.

11. Procédé selon la revendication 10, **caractérisé en ce que** l'on lave les particules.
